# EUROPEAN PATENT APPLICATION

(11) **EP 0 661 862 A1**
(43) Date of publication of application: **05.07.1995**
(21) Application number: 93480227.3
(22) Date of filing: 15.12.1993
(51) Int. Cl.: H04M 11/06, H04L 27/00, H03M 1/00

(54) **Coupling device for allowing the communication between a DCE or computer to a PSTN telephone network including infra-red transmitter and receiver and sigma-delta coder**

(71) Applicant: International Business Machines Corporation, Armonk, N.Y. 10504 (US)
(72) Inventor: Martin, Jean, F-06800 Cagnes-Sur-Mer (FR); Vautier, Rémi, F-06200 Nice (FR)
(74) Representative: Schuffenecker, Thierry

(57) **Abstract**

A Coupling device or Direct Access Arrangement device for allowing the connection of a system such as a Data Circuit Terminating equipment (DCE) or a computer to a Public Switched Telephone network (PSTN). The device includes a Sigma-delta converter (103) for converting the analog signal received (Rx) and transmitted (Tx) to the telephone line in a one-bit train of sigma-delta code pulses. Additionally, a set of infra-red transmitting means (180, 181) and infra-red receiving means (190, 191) allow a a wireless digital communication of said one-bit train of sigma-delta puses with said computer or DCE. The coupling device further includes means (150) being connected to the infra-red transmitting and receiving means and which receives from said computer during a first phase, exclusive and prior to the effective communication of said train of sigma-delta pulses, at least one control character comprising bit information elements for controlling the seizing and dialing processes involved in the telecommunication. Therefore, both a wireless and galvanic isolation between the coupler and the personal computer or the DCE is achieved. According to the invention, the control character which is transmitted by the computer or the DCE to the coupler comprises bits indicating the status of the OFF_HOOK, DIAL_PULSE, DIAL_LOOP etc... Preferably, there is further included means (150) which is connected to the infra-red transmitting and receiving means for particularly transmitting to said computer, during an initialization phase occurring after the power-on of the computer or the coupler, exclusive and prior to the effective communication of said train of sigma-delta pulses, at least one control character comprising a country-code characteristics identifying the nature of the PSTN to which the coupler is connected.

## Description

### Technical field of the invention

The invention relates to the telecommunication field and more particularly to a coupling device or Direct Access Arrangement (DAA) device for allowing the connection of a system such as a Data Circuit Terminating equipment (DCE) or a computer to a Public Switched Telephone network (PSTN).

### Background art

Coupling interfaces, also known as Direct Access Arrangements (DAA) are used for the connection of systems, such as data processing systems to the Public Switched Telephone networks.

An example of such a coupler is described in european patent application 90480204.8 entitled "Coupling device to be connected to a DCE for the connection to a Public Switched Telephone Network" and assigned to the assignee of the present patent application. The coupler provides the interface between a DCE or a personal system or still a portable personal system, with the telephone network to which the latter is to be connected. For that purpose, the coupler should prevent the following characteristics: firstly, it assures a galvanic isolation between the sys tem and the telephone network so that the latter will not he perturbed by the connection. Secondly, the coupler allows a bi-directional transmission of the analog signal between the telephone network and the personal system with a minimum amount of distortion, particularly in the European countries where the level of the analog signal is high, ie the emission power transmitted through the network is high. The amount of distortion rate, which is measured by the Total Harmonic Distortion (THD) rate, is particularly critical for high speed full-duplex transmissions (such as CCITT V32 transmissions) involving sophisticated echo cancellation devices requiring high sig nal/noise ratios. At last, it is highly desired that the coupling device occupies the smaller place so that it can be used for small systems such as portable systems, lap- tops, or still conforms to the credit card size PCMCIA standart, defined by the Personal Computer Memory Card International Association (PCMCIA).

EP-A-0 263 246 gives another example of an adaptation unit to a telecommunication network.

NL-A-9 000 490 also discloses an adaptation unit between an user apparatus and the telephone network which supplies a galvanic separation between the telephone network and the user apparatus. In this device, the galvanic separation is made by means of a set of optical devices in each of the connection lines between the user apparatus and the telephone network, therefore permitting to get rid of the large, heavy and costly traditional transformer. Particularly, in this system, the information carrying lines Tx and Rx each carry a modulator respectively and a demodulator. However, the optical components in this system appear to be used as analog converters that is to say that they provide the conversion of analog signals varying within a range of analog values, rather than switching between two discrete values.

This use of the optical elements in an adaptation unit can be greatly improved by combining theses with a sigma-delta coder which converts the analog signal Tx and Rx into a train of sigma-delta pulses which can then be conveyed throughout the optical components. This is disclosed in European patent application EP 0573721 entitled "Coupling device for allowing the connection to a public switched telephone network, and DCE or personal system using the same" which is assigned to the assignee of the present application discloses a coupling for allowing the connection of a system such as a Data Circuit Terminating equipment (DCE) or a computer to a Public Switched Telephone network (PSTN). This application, which contents is incorporated by simple reference in the present application provides the possibility of achieving the galvanic isolation between the PSTN and the DCE or the personal computer by means of a serie of digital opto-couplers which are used for conveying either the control signals (such as the "dial pulse", "off-hook" etc...) and the sigma-delta bit train representing the analog information to be transmitted.

However, it has appeared that, in order to better increase the galvanic isolation as well as making the telecommunication more convenient for the user, the physical cable between the adaptation unit and the user apparatus should be eliminated. That would allow, once the coupler (having the size of a very small box) is plugged in the common PSTN plug, an easy and wireless communication between the user apparatus through the telecommunication network.

### Summary of the invention

The technical problem to be solved by the present invention is to provide a method and apparatus for performing the connection of a DCE or a personal computer to a determined PSTN which does not require the use of an interface cable separating the personal computer and the adaptation unit or coupler which is plugged in the common telecommunication network plug. Additionally, the problem consists in increasing more the galvanic isolation between the systems and the telephone network while assuring a high level of signal to noise ratio characterizing the transmission.

This problem is solved by the apparatus according to the present invention, particularly the Direct Access Arrangement, which uses a sigma delta-coder for converting the analog Tx and Rx signals into a corresponding train of sigma-delta pulses. The sigma-delta pulses train is exchanged between the coupler connected to the PSTN and the personal computer by means of a set of infra-red transmitter and receiver, therefore providing a wireless communication between the user apparatus and the telecommunication network. Prior to the effective infra-red communication of the above sigma-delta pulses, the seizing and calling process is performed by means of control characterers generated by the DCE or the computer and which are transmitted via the wireless infra-red transmission to the coupler. Inside the coupler, these control characters, the comprising the states of the off-hook, DIAL_PULSE and other well-known dialing control signals are decoded and the dialing process is performed accordingly. The present invention takes advantage of the infra-red receiver and transmitter to provide a perfect galvanic isolation, thus eliminating the use of additional transformers or opto-couplers. Therefore, the two traditionally distinct function, that is the galvanic isolation and the communication between the coupler with its associated computer, are advantageously and very effectively embodied by means of a single element based on an infra-red communication.

In a further embodiment of the invention, after the power-on of the machines and before the effective transmission and reception of the sigma-delta pulses train via the infra-red transmission, the coupler transmits to its associated personal computer or DCE at least one control character which comprises a country-code identifier which characterizes the nature of the PSTN to which the coupler is connected. Therefore, the computer is made aware of the type of the PSTN though which the communication will be performed, and can initializes its communication software application, load the right parameters (frequency tones etc...) in the appropriate registers accordingly.

In another embodiment of the invention, the wireless transmission is provided by means of a set of radio emitter and receiver.

### Description of the drawings

Figure 1 illustrates a synoptic view of the coupler or the Direct Access Arrangement in accordance with the present invention.

Figure 2 is a view of the hybrid part of the coupling interface of the invention.

Figure 3 illustrates the sigma-delta converter which is used in the coupling interface of the invention.

Figure 4 is a view of the PSTN line adaptation circuit of the coupling interface.

Figure 5 shows the structure of power supply circuit of the coupling interface.

Figure 6a shows examples of bit streams which are existing on the Transmit or Receive data bitstream on leads 182 and 183.

Figure 6b shows the format of the control characters exchanged between the DAA and the personal computer in the preferred embodiment of the invention.

### Description of a preferred embodiment of the invention

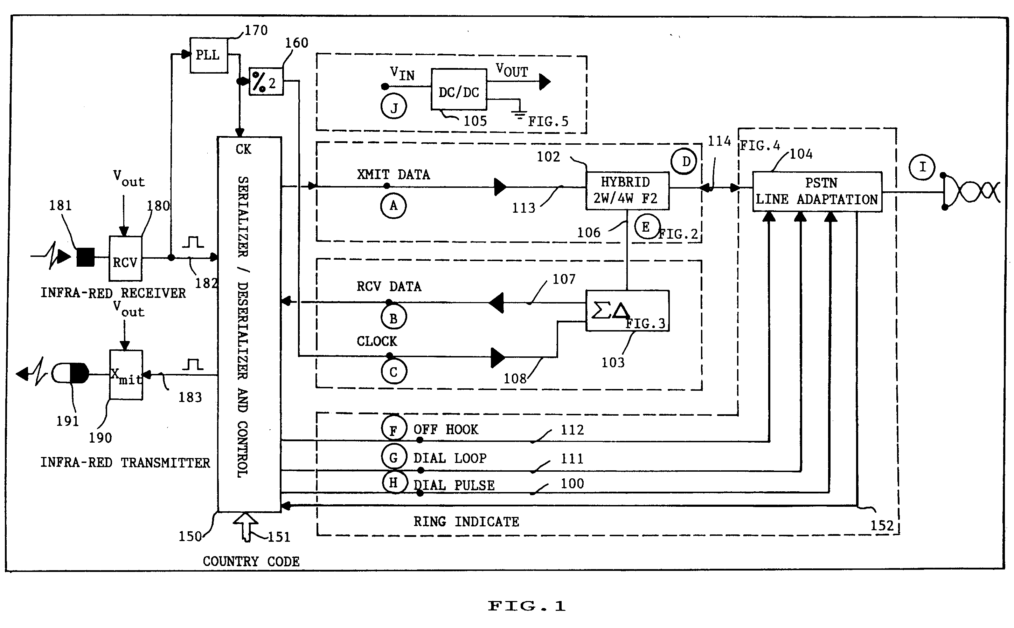

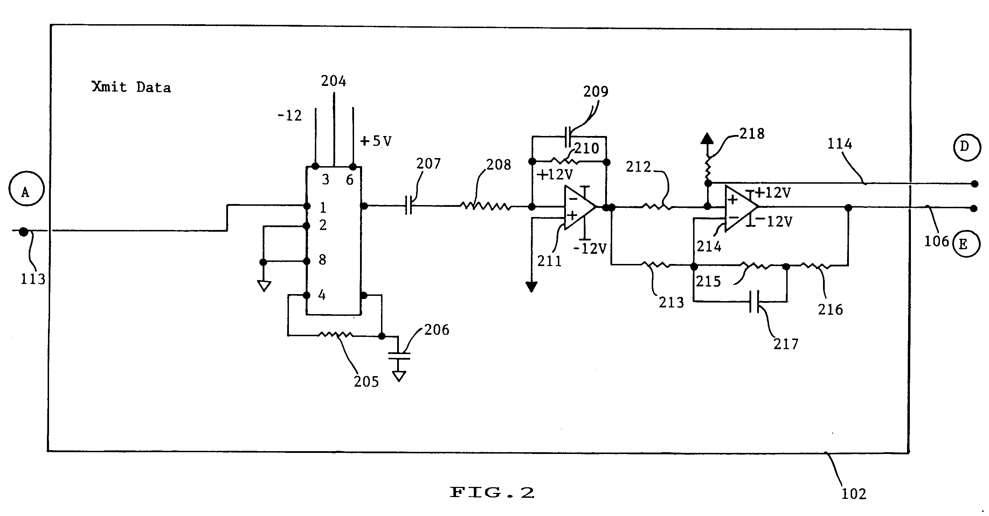

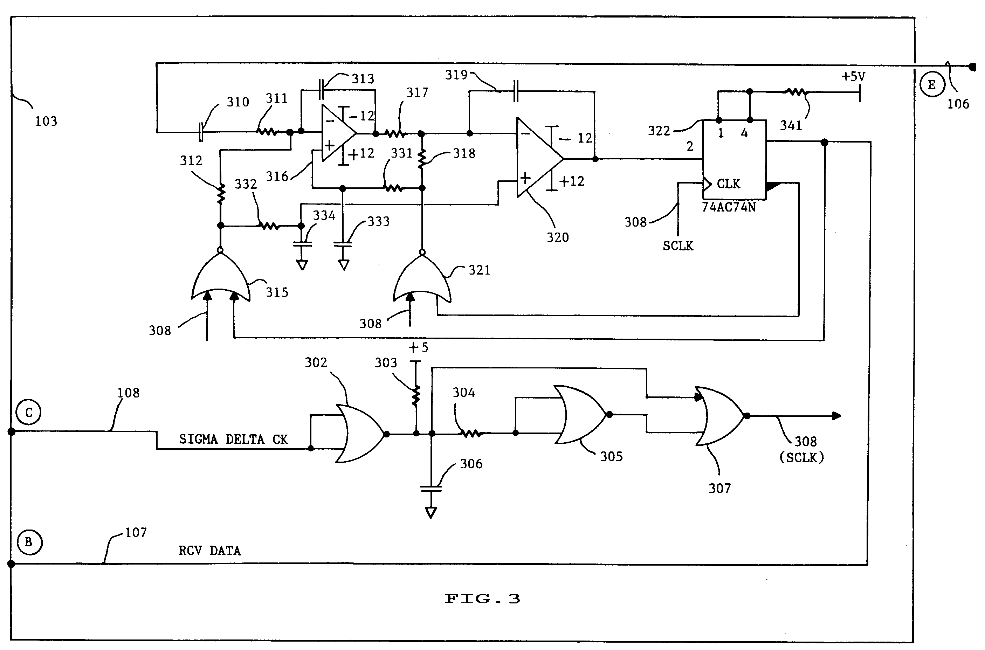

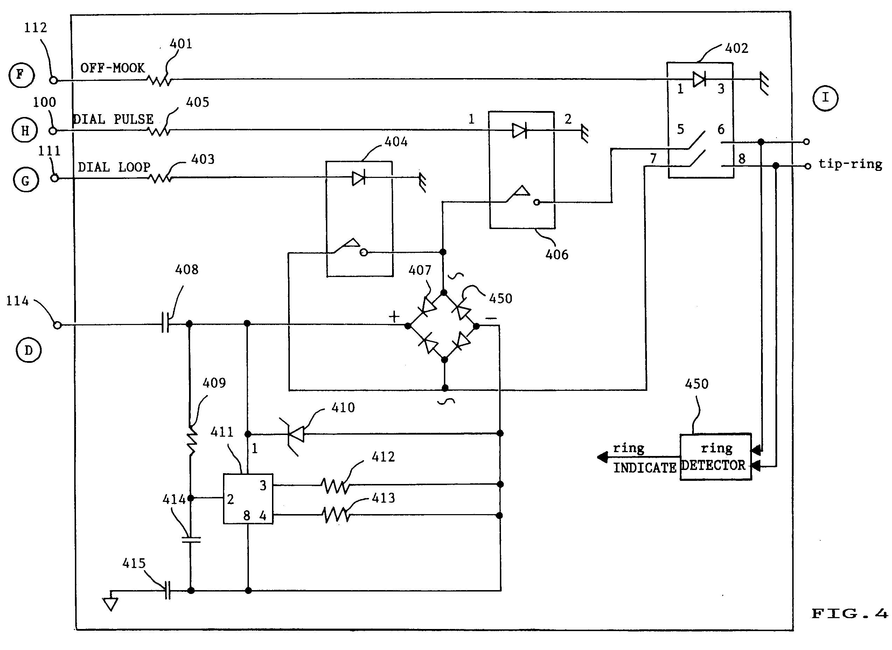

With respect to figure 1, there is illustrated a synoptic view of the coupling interface circuit or the Direct Access arrangement in accordance to the present invention. The DAA comprises a PSTN line adaptation circuit 104 which performs an electrical adaptation of the signal exchanged with the tip-rings leads of the telephone line. Line adaptation circuit 104, which will be described hereinafter with more details with respect to figure 4, is controlled by OFF-HOOK lead 112, DIAL PULSE lead 100 and DIAL LOOP lead 111 which provides the traditional seizing and decadic pulsing functions generated by a serializer/deserializer and control circuit 150 as will he explained hereinafter with more details. Conversely, a traditional RING INDICATE SIGNAL, representative of the presence of a ring signal on the tip-rings leads, is transmitted from the circuit 104 to the serializer/deserializer and control circuit 150. PSTN line adaptation circuit 104 is connected via a lead 114 to an hybrid circuit providing the two-wires/four-wires conversion which is particularly described below with respect to figure 2. The analog signal is then conveyed via a lead 106 to a sigma-delta coder 103 which will be described in reference with figure 3. Sigma-delta coder 103 is used for converting the analog signal into a train of sigma-delta pulses which is transmitted to a RECEIVE DATA lead 107, at the rate of a sigma-delta clock on a lead 108.

In the preferred embodiment of the invention, an infra-red Led PIN 181 located within the DAA detects the infra-red signal which is transmitted by the DCE or the personal computer. The detected infra-red signal is then applied to a specific receiver/demodulator circuit 180 which performs the desired demodulation and amplification operations in order to provide the received train of data which is transmitted to serializer/deserializer and control circuit 150 by means of lead 151. Led PIN 181 can be embodied by means of a SIEMENS component manufactured under the reference PBW 34FA while circuit 180 can be a circuit manufactured by PHILIPS under the reference NE615. However, it should be noticed that any equivalent devices for performing the infra-red reception can be used in the present invention. The train of the received data bits which is generated at the output of receiver/demodulator 180 is transmitted to the input of a Phase Locked Loop (PLL) circuit 170 for performing the clock recovery function. The output of PLL circuit 170 is transmitted to an CK clock input lead of serializer/deserializer and control circuit 150 as well as to the input of a divide-by-two circuit 160. Divide-by-two circuit provides the sigma-delta clock signal which is transmitted to the sigma-delta coder 103 by means of lead 108. Conversely, the train of data bits to be transmitted from the DAA to the DCE or the personal computer are transmitted from an output lead 183 of serializer/deserializer and control circuit 150 to the input of a infra-red transmitter/modulator circuit 190 which drives an Infra-red Led 191.

A bus 151 connected to circuit 150 carries a country-code information which characterized the nature of the PSTN to which the DAA is to be connected. Such a country-code mechanism is described with many details in the above mentioned European patent application n¢ 90480204.8 entitled "coupling device to be connected to a DCE for the connection to a PSTN", and which contents is incorporated by simple reference.

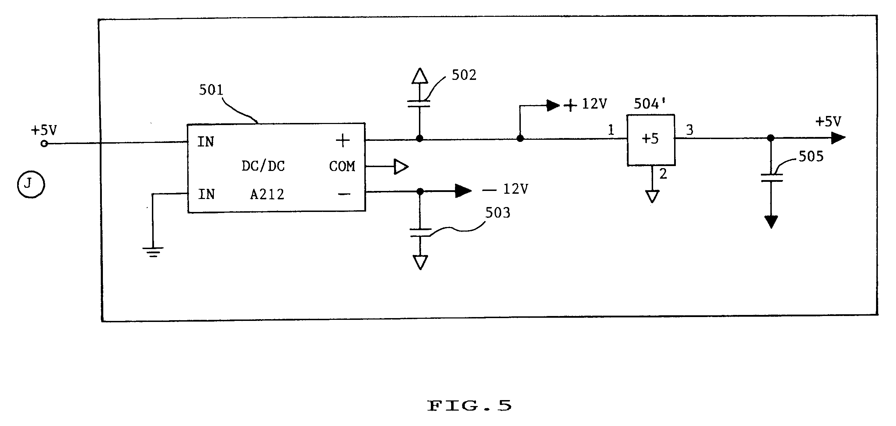

At last, a power supply circuit 105, described hereinafter with reference to figure 5, is based on a DC/DC converter and provides the required power supply voltage with is necessary for the sigma-delta coder 103, the hybrid circuit 102, the infra-red circuits etc....

Referring now to figure 2, there is illustrated a preferred embodiment of the hybrid circuit 102. Hybrid circuit 102 receives on Transmit Data (XMIT DATA) lead 113 a train of sigma-delta pulses representative of the analog signal to the transmitted to the telephone network and which is generated inside the system to which the DAA is connected. This train of sigma-delta pulses can be generated by means of a second (not illustrated) sigma-delta coder located within that system. The train of XMIT sigma-delta pulses on lead 113 is entered into a 5_order low pass filter 204, such as a LT1063 manufactured by LINEAR TECHNOLOGY based on a switched capacity technology. The frequency cut-off value is chosen so that to match the frequency characteristics of the telephone network and is determined by a couple of resistor 205 and capacitor 206 which are respectively connected between pin 4 and pin 5; and pin 5 and ground. The use of a 5_order low pass filter appears particularly useful for suppressing the energy of the high-order harmonics which will be transmitted to the telephone line. Then, the signal is transmitted to a band- bass amplifier circuit which is based on an operational amplifier 211 powered by means of a +12V, -12V and ground levels which are provided by Power supply 105. The band- pass filter also comprises a resistor 208 in serie with a capacitor 207, the whole serie being connected between the output of filter 204 and the inverting input of OA 211. The band-pass filter is then completed by a resistor 210 and a capacitor 209, connected in parallel between the inverting input and the output of OA 211. The values of resistances 208, 210 and capacitors 207 and 209 are selected so as to match the frequency characteristics of the 300-3400 Hz band width telephone line. Then the signal is entered into an hybrid circuit which is based on OA 214 associated with resistors 212, 213, 215, 216, 218 and capacitor 217. The output of OA 211 is connected to a first lead of resistor 212 and to a first lead of resistor 213, a second lead of resistors 221 and 213 being respectively connected to the positive input lead and the negative input lead of OA 214. The positive input lead is also connected to lead 114 communicating with PSTN line adaptation circuit (reference D) and to resistor 218 having its other lead connected to ground. The negative input lead of OS 214 is also connected to a first lead of a branch comprised of resistors 215 and 216 in serie, the opposite lead being connected to the output lead of OA 214. Capacitor 217 is connected in parallel with resistor 215 and provides an average rejection which matches most of the european telephone lines. In this respect, it should be noticed that since the hybrid circuit 102 according to the invention does not use any transformer for interfacing the telephone line, ie the positive input lead of OA 214 directly receives the analog signal on lead 114 which is transmitted and received from the telephone line, the rejection is also greatly improved. This results from the fact that a transformer deeply modifies the impedance characteristics seen by the circuit to which it is connected. Further, the suppression of the transformer at this point of the circuit also provides an improvement of the reflexion factor. At last, the insertion loss due to the resistive wiring of a transformer and which traditionaly has to be compensated is also suppressed. The output of OA 214 generates a receive signal on lead 106 (referred E) which is then transmitted to the sigma-delta coder illustrated in figure 3. OA 214 receives +12V, -12V and ground supply voltages provided by voltage supply circuit 105.

With respect to figure 3, there is illustrated the double- loop sigma-delta converter which is used for converting the analog signal provided by hybrid circuit 102 into a train of sigma-delta pulses which is transmitted to the personal computer by means of the infra-red transmission. This sigma-delta converter is particularly described in european patent application n¢ 91480009.9 filed on January 15th 1991, entitled "sigma-delta converter", assigned to the assignee of the present application and which is therein incorporated by simple reference. Briefly, the sigma-delta converter comprises a capacitor 310 receiving the analog signal on lead 106 and which suppresses its DC component. The resulting signal is transmitted to a first lead of a resistor 311 having a second lead respectively connected to the inverting input of an operational amplifier (OA) 314, to a first lead of a resistor 312 and to a first lead of a capacitor 313. The output of the latter operational amplifier is connected to a second lead of capacitor 313 and to a first lead of a resistor 317 having a second lead respectively connected to the inverting input of a second operational amplifier 320, to a first lead of a resistor 318, and to a first lead of a capacitor 319. Operational amplifier 320 has its output lead which is connected to a second lead of capacitor 319. Operational amplifier 320 has its output lead connected to a second lead of capacitor 319 and to the D-input lead of a D-type latch 322, such as a 74AC74N type latch, used as a threshold device. Latch 322 provides at its output lead a sequence of voltages being either equal to 5 volts (supplied by power supply circuit 105) or 0 Volt at the rythm of a SCLK clock existing at its CK input lead (pin 3 in the drawing) and generated at the output of NOR gate 307 as described below. The non-inverted Q output lead of D-latch 322 is connected to a first input of a NOR gate 315 of the type 7402 well known to the skilled mail having its second input lead receiving the Sigma-delta SClk clock generated by NOR gate 307, and also an output lead connected to a second lead of resistor 312. The inverted output lead of latch 222 is connected to a first input of a NOR gate 321 which has its second input also receiving the sigma-delta clock Sclk, and an output lead which is connected to a second lead of resistor 318. It appears that the feedback signal appearing at the output of NOR gate 315 is added to the analog input AC voltage to be converter and then integrated by means of the circuit formed by OA 314, resistors 311 and 312 and capacitor 313. Similarly, the feedback signal appearing at the output of NOR 321 is added to the signal at the output of OA 314 and integrated by means of the circuit based on OA 320, resistors 317 and 318, and capacitor 319. Thus a double-loop structure sigma-delta coder is provided allowing a very high level of signal-to-noise ratio. D_latch circuit 322 has a pin 4 which is connected to the +5V voltage via a resistor 341. The positive input lead of OA 314 is connected to a first lead of a capacitor 333 having a second lead connected to ground; and also to a first lead of a resistor 331 having a second lead connected to the output of NOR gate 321. Similarly, the positive input lead of OA 320 is connected to a first lead of a capacitor 334 having a second lead connected to ground; and also to a first lead of a resistor 332 having a second lead connected to the output lead of NOR 315. This provides a compensation of the DC component introduced in the sigma- delta code which is particularly due to the mismatch of the rise and fall time of the latch 322.

The sigma-delta clock which is provided by the divide-by-two circuit 160 is transmitted to the two input leads of a NOR gate gate 302, mounted as an inverter. This sigma-delta clock signal is a squared wave clock signal having the desired sigma-delta frequency value, e.g. 2.048 Mhz in the preferred embodiment of the invention. The output of NOR gate 302 is connected to a first lead of a resistor 304, to a first lead of a resistor 303 having its second lead con nected to the voltage supply (5 Volts in the preferred embodiment), and to a first input of a NOR gate 307. Resistor 304 has a second input lead which is connected to a first input of a capacitor 306 having a second lead connected to ground, and to the two input leads of a NOR gate 305, the output of which being connected to a second input of NOR 307. The output of NOR gate 307 eventually provides on a lead 308 the required Sclk clock. As explained in the above mentioned patent application, the use of NOR gates 315 and 321 which are driven at the rate of the sigma- delta clock provides a return-to-zero of the sigma-delta code generated at the output of the D_latch 322 at every period of the sigma-delta clock whereby the sigma-delta converter becomes insensitive to the asymmetry of the rise and fall time of the threshold device. This results in an substantial increase of the signal-to-noise ratio. The D-latch 322 generates at its output lead 107 the RECEIVE data bits.

With respect to figure 4, there is described the PSTN line adaptation circuit 104 of the coupling interface according to the present invention. PSTN line adaptation circuit 104 performs the functions LINE SEIZE, decadic pulsing, and also the AC and DC adaptation to the telephone line. Such a circuit is particularly described in the European patent applications n¢90480204.8 and n¢90480203.0, filed on De cember 5th 1990, assigned to the assignee of the present application and which are therein incorporated by reference. In the preferred embodiment of the invention, the OFF-HOOK function is provided by means of static relays or opto-relays 402 which is controlled by means of the personal system connected to the coupler via a resistor 401 and lead 112 (ref. F). Similarly, the DIAL LOOP function is achieved by means of an additional static relay 404 which is controlled by the personal system via DIAL_LOOP lead 111 (ref. G) and resistor 403. At last, the DIAL PULSE function is carried out by means of a static relay 406 which is controlled by the personal system via DIAL PULSE lead 100 (Ref. H) and a resistor 405. It should be noticed that a set of analog switches can be used for the embodiment of relays 402, 406 and 404. This is made possible since the galvanic isolation function which was performed in the prior art system by components 402, 404 and 406, is no longer necessary in the invention since the galvanic isolation is achieved by means of the infra-red transmission. Therefore, the use of simple, low-cost, analog switches can be made for embodying components 402, 404 and 406.

The AC and DC line impedance adaptation of the line is achieved by means of specific chip 411 referred TEA 7868 manufactured by THOMSON. In the preferred embodiment of the invention, this chip is directly powered from the telephone line by means of the set of 4 diods which are mounted in order to form a double-wave rectifier 450. Pin 1 of the latter circuit receives the positive voltage which is also connected via a capacity 408 to lead 114 (ref. D), and is also connected to a first lead of a Zener Diod 410 connected at its other end to the negative voltage supplied by the 4-diod bridge. Zener diod 410 is used for eliminat ing transiants overvoltages which might appear on the telephone line and which could destroy chip 411. Chip 411 has its pins 3 and 4 which are respectively connected to the negative voltage provided by the 4-diods bridges via a resistor 412 and 413. Pin 8 is also connected to that negative voltage, the latter being decoupled from the ground by means of a capacitor 415. A capacitor 414 is then connected between pin 2 and pin 8 and a resistor 409 is connected between pin 1 and pin 2. It should be noticed that any equivalent circuit to the TEA 7868 manufactured by THOMSON is possible without departing from the spirit of this invention.

Figure 5 illustrates an possible example of the structure of the power supply circuit 105 which is required for providing the different voltages needed in the DAA in accordance with the present invention, and particularly for supplying current to the sigma-delta coder 103 and the set of infra-red receiver and transmitter. It should be noticed that, since the galvanic isolation between the DCE or the personal computer and the telephone line is provided by means of the infra-red transmission, the DCC converter which was used in the above mentioned prior art application does no longer any galvanic isolation per se, and a simple, low-cost converter can be used.

The +5 V voltage which is required for logic circuits (for instance D_latch 322 and the different NOR gates) is derived from the +12V by means of a regula tor of the type 78L05. It should be noted that the power supply 105 could also be fully embodied by means of discrete components.

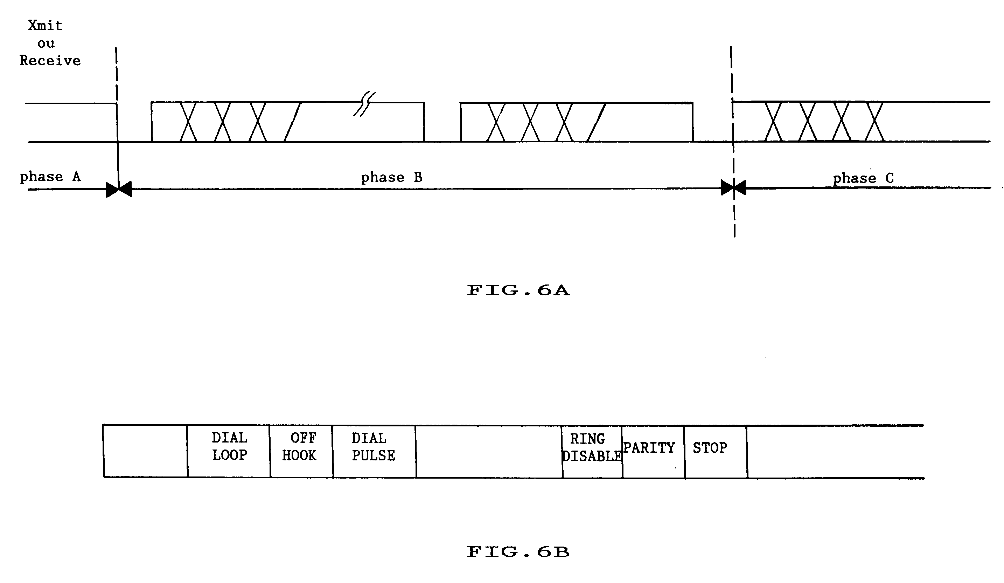

The DAA in accordance to the present invention operates as follows as illustrated in figures 6a and 6b. Before the DCE or the personal computer initiates a communication through the PSTN network, the DAA is in an idle state or in a sleep mode wherein only some essential circuits, e.g. these involved in the ring detection function, are powered and activated. This is achieved by well-known circuits, such as those existing in portable computers, and will therefore not be described with more details. The above mentioned idle mode is characterized a phase A, as illustrated in figure 6a, where the output of circuit 180 is set to a high leveI for more than a predetermined period. In other words, if the serializer/deserializer and control circuit 150 receives at its input lead 182 a high level for more than the latter period, the latter circuit 150 will consider that the DAA should be kept in the idle state. Assuming now that the DCE or the personal computer wishes to initiate a call through the PSTN, the latter begins an infra-red transmission which is detected by infra-red lead 181, the latter detection being transmitted to receive/demodulation circuit 180. Consequently, this results in the output of circuit 180 switching in a low level, what is detected by serializer/deserializer and control circuit 150 and causes all the circuits of the DAA to be powered. The full powering of the DAA coincides with the start of the phase B which is illustrated in figure 6a. Phase B begins with a predetermined initialization period where the DCE or the personal computer transmits an infra-red signal representative of a clock signal being representative of the nominal sigma-delta clock signal which will be existing on lead 108. This permits the running of the PLL circuit 170 to become fully established as well as the level of the power voltages within the DAA. In the preferred embodiment of the invention, this initialization period is set to one to several milliseconds.

After the above initialization, the DCE or the personal computer starts a repetitive infra-red transmission of a control character. In the preferred embodiment of the invention, the control character is a 8-bit start-stop character which format is illustrated in figure 6b and as follows:
bit 1: START bit 2: DIAL LOOP bit which representative of the state of
DIAL_LOOP
lead 111; bit 3: OFF_HOOK bit being representative of the state of
OFF_HOOK lead
112; bit 4: DIAL_PULSE bit corresponding to the state of the
DIAL_PULSE
lead 100; bit 5: COUNTRY_CODE_SHIFT; bit 6: LOOP 1; bit 7:
RING_INDICATE being representative of the state of the
RING_INDICATE lead 152 bit 8: PARITY

It should be noticed that the above control character is exchanged between the DCE and the DAA in both ways. Therefore, bits 2, 3, 4, 6 are used for controlling the DAA by the personal computer of the DCE. Conversely, bits 5 and 7 are used for permitting the serializer/deserializer and control circuits to transmit some information to the DCE.

Two particular bits of the above frame requires some further explanations:

With respect to the COUNTRY_CODE_SHIFT bit for example, the latter is used after the general power-on of the DCE or that of the personal computer so that the latter can identifying the nature of the PSTN though which the telephone communication will be performed as described in the above mentioned patent applications. This is achieved by the successive transmission of each bit of the country-code character carried on bus 151 by serializer/deserializer and control circuit 150 to the DCE being powered. However, the latter identification process being completed, the COUNTRY_CODE_SHIFT bit is no more used in the preferred embodiment of the invention.

With respect to the LOOP bit, this bit is used for permitting the DCE or the personal computer to control the DAA so that the latter performs an internal transmit-receive loop which is well-known in the art. This allows the internal testing of the components comprised in the DAA and particularly the checking of the infra-red transmission. It should be noticed that more than one loop could be embodied.

The control character which is repetitively transmitted by the DCE or the personal computer is decoded by control circuit 150 which generates the corresponding control signals on leads 100, 111 and 112. Since it was assumed that the telecommunication was to be established, the DCE firstly transmits a control character which has an OFF_HOOK bit being set to a logical one. Correspondly, control circuit 150 decodes this one and causes OFF_HOOK signal on lead 112 to be set to a high level and results in the PSTN line adaptation circuit 104 to seize the line. Then, the decading pulsing for dialing which is performed by the latter circuit is achieved by means of the combination of DIAL_LOOP and DIAL_PULSE bits in accordance with the traditional dialing rules which will not be explained here.

When the dialing process is completed, the DCE or the personal computer ends the phase B. The ending of this phase occurs with the transmission by the DCE or the personal computer of a sequence of more than 256 successive logical zero, what is detected by control circuit 150 as being the end of the control phase B. From this instant both DCE and DAA operate in a phase C which is the traditional data transmission phase where data is exchanged between two terminating equipments through the Direct Access Arrangements connected to the PSTN.

When one of the telecommunication equipment wishes to end the communication of the phase C, the latter transmits a number of successive logical one, more than 256 in the preferred embodiment of the invention, what is detected by the control circuit 150 within the DAA being associated to this DCE. Control circuit 150 then inactivates the OFF_HOOK lead 112 what results in the release of the line and the process proceeds to the idle state of phase A.

It should be noticed that in the preferred of the invention, the serializer/deserializer and control circuit 150 can be advantageously based on a microprocessor. Also, it should be noticed that the galvanic isolation and the transmission between the DCE and its corresponding DAA is perormed by means of an infra-red transmission. However, it clearly appears that any equivalent transmission could be contemplated in a straightforwardly fashion. For instance, the infra-red LEDs 181 (resp. 190) and its associated receiver/demodulator circuits 180, (resp. transmitter/modulator circuit 190) could be advantageously replaced by equivalents radio receivers and emitters (AM or FM), for instance. Similarly, the use of the invention for optical-fibers transmission between the DCE and the DAA can be done. At last, if desired, the sigma-delta conversion can be replaced by a single one-bit conversion as provided for instance by a delta coder.

## Claims

1. Coupling device or Direct Access Arrangement device for allowing the connection of a system such as a Data Circuit Terminating equipment (DCE) or a computer to a Public Switched Telephone network (PSTN) characterized in that it includes:
a Sigma-delta converter (103) for converting the analog signal received (Rx) and transmitted (Tx) to the telephone line in a one-bit train of sigma-delta code pulses;
infra-red transmitting means (180, 181) and infra-red receiving means (190, 191) for allowing a wireless digital communication of said one-bit train of sigma-delta puses with said computer or DCE;
means (150) connected to said infra-red transmitting and receiving means for particularly receiving from said computer during a first phase, exclusive and prior to the effective communication of said train of sigma-delta pulses, at least one control character comprising bit information elements for controlling the seizing and dialing processes involved in the telecommunication;
whereby said infra-red transmission and receiving means provides a wireless communication between the DCE or the computer and the Public Switched Telephone Network (PSTN) while ensuring a high level of galvanic isolation.

2. Device according to claim 1 characterized in that it further comprises means (150) connected to said infra-red transmitting and receiving means for particularly transmitting to said computer, during an initialization phase occurring after the power-on of the computer or the coupler, exclusive and prior to the effective communication of said train of sigma-delta pulses, at least one control character comprising a country-code characteristics identifying the nature of the PSTN to which the coupler is connected, whereby said DCE or computer is made aware of the characteristics of the country to be used for the telecommunication.

3. Device according to claim 1 or 2 characterized in that said control character transmitted by said computer to said coupler comprises bits indicating the status of the OFF_HOOK, DIAL_PULSE, DIAL_LOOP, whereby said coupler performs the calling processes under control of said computer.

4. Device according to claim 3 characterized in that said sigma-delta coder is a double-loop sigma- delta coder.

5. Device according to claim 2 or 3 characterized in that said sigma-delta coder includes a threshold device (322) for generating an output and feedback signal, a filter (314, 329) receiving said analog input signal and said output and feedback signal by means of at least one feedback loop,
- means (315, 321) located in said at least one feed back loop for performing a return-to-specified-logi cal-state of the sigma-delta code generated by said threshold device at every period of the sigma-delta clock whereby the converter is insensitive to the asymmetry of the rise and fall time of the threshold device.

6. Device according to claim 5 characterized in that it further includes:
- a first integrator (314, 313, 311, 312) receiving said analog input signal coming from said telephone line, and a first feedback signal coming from a first feedback loop,
- a second integrator (320, 317, 318, 319) receiving the analog output of said first integrator and a second feedback signal coming from a second feedback loop and having an output lead connected to said threshold device,
- first means (315, 308) for performing a return-to- zero of the feedback signal conveyed through said first feedback loop to said first integrator,
- second means (321, 308) for performing a return-to- zero of the feedback signal conveyed through said second feedback loop to said second integrator.

7. Device according to claim 6 characterized in that said first and second means for performing a return-to-zero of the feedback signals conveyed through the both feedback loop comprises NOR gates (315, 321) connected to said threshold device (222) and receiving said sigma-delta clock.

8. Device according to claim 6 characterized in that said sigma-delta converter further includes:
- a latch (322) clocked by a sigma-delta clock (Sclk) coming from said system and generating a sigma-delta code at a first output lead and an inverted sigma-delta code at a second output lead,
- a first integrator (314, 311, 312, 313) receiving the analog signal from the telephone line to be converted and a first feedback signal coming from a first NOR gate (315) having a first input connected to said clock and a second input connected to said first output of said latch (322),
- a second integrator (320, 317, 318, 319) receiving the output signal of said first integrator and a second feedback signal coming from a second NOR gate (321) having a first input receiving said clock and a second input connected to said second output of said latch (322).

9. Device according to anyone of the preceding claims characterized in that it includes means for performing a radio communication with said DCE or said computer in lieu of said infra-red communication.

10. Data circuit terminating equipment including the coupling device according to anyone of claims 1-9.

11. Personal computer including means allowing the communication with the coupling device in accordance with anyone of the preceding claims.
